# EUROPÄISCHE PATENTANMELDUNG

(11) **EP 4 033 225 A1**
(43) Veröffentlichungstag der Anmeldung: **27.07.2022**
(21) Anmeldenummer: 22152380.6
(22) Anmeldetag: 20.01.2022
(51) Int. Cl.: G01N 21/88, G01N 21/95

(54) **VERFAHREN ZUR OPTISCHEN DETEKTION VON FEHLERN IN KERAMISCHEN ARTIKELN**

(30) Priorität: 20.01.2021 DE 102021101150
(71) Anmelder: Lippert GmbH & Co. KG, 92690 Pressath (DE)
(72) Erfinder: KLEVTSOV, Valery Alexeevich, 196602 Saint Petersburg (RU); GRADMANN, Michael, 92690 Pressath (DE)
(74) Vertreter: Louis Pöhlau Lohrentz

(57) **Zusammenfassung**

Vorgeschlagen wird ein Verfahren zur optischen Detektion von Fehlern in keramischen Artikeln (2) wobei eine Lichtquelle (3) einen keramischen Artikel (2) beleuchtet, und wobei eine Kamera (4) als eine Zeilenkamera ausgebildet ist und zur Detektion von Fehlern im keramischen Artikel (2) bei einer Bildaufnahme eine Zeile des keramischen Artikels (2) aufnimmt, und wobei der keramische Artikel (2) auf einer Fördereinheit (5) derart transportiert wird, dass bei mehreren Bildaufnahmen die Kamera (4) mehrere Zeilen des keramischen Artikels (2) aufnimmt, und wobei eine elektronische Steuereinrichtung (6) die Kamera (4) und/oder die Lichtquelle (3) und/oder die Fördereinheit (5) steuert und wobei eine Auswerteeinrichtung (7) die aufgenommenen Bilder auswertet, insbesondere die mehreren aufgenommenen Zeilen der Zeilenkamera zu einem Bild zusammensetzt. Wesentlich dabei ist, dass der keramische Artikel (2) telezentrisch beleuchtet und/oder telezentrisch detektiert wird, vorzugsweise dass die Lichtquelle (3) telezentrisch auf dem keramischen Artikel (2) abgebildet wird und/oder dass die Detektionsfläche der Kamera (4) telezentrisch auf dem keramischen Artikel (2) abgebildet wird.

## Beschreibung

Die Erfindung betrifft ein Verfahren zur optischen Detektion von Fehlern in keramischen Artikeln nach den Merkmalen des Oberbegriffs des Anspruchs 1 und eine Vorrichtung zur optischen Detektion von Fehlern in keramischen Artikeln nach den Merkmalen des Oberbegriffs des Anspruchs 12.

Beim Herstellen keramischer Körper können unterschiedliche Fehler auftreten. Dabei kann es sich beispielsweise um Verfärbungen, Flecken, Glasurfehler, Risse, Beschädigungen, Anhaftungen oder Formabweichungen handeln. Die Fehler können jeweils ein völlig unterschiedliches Erscheinungsbild aufweisen. Bei der Herstellung von keramischen Artikeln oder Geschirr werden die hergestellten Teile einer manuellen Inspektion unterzogen und dabei wird das Geschirr in verschiedene Qualitätsstufen eingeteilt. Die sogenannte Sortierung erfolgt dabei je nach Qualität bzw. je nach Fehlerbild in unterschiedliche Kategorien. Bei aktuellen Verfahren erfolgt eine Sichtprüfung aller Produkte per Hand. Also erfolgt eine Beurteilung der Qualität durch eine prüfende Person. Eine derartige Prüfung durch eine Person ist abhängig von der die Prüfung durchführenden Person und kann im Ergebnis zum Teil großen Schwankungen unterliegen.

Aus der Praxis sind bereits Systeme zur optischen Qualitätssicherung in der Fertigung aus anderen technischen Bereichen bekannt. Bei solchen Systemen ist eine möglichst gleichmäßige diffuse Beleuchtung vorgesehen, um Mängel oder Fehler reproduzierbar zu erkennen.

Aus der EP 1 049 925 A1 ist ein System zur optischen Inspektion von Oberflächen bekannt. Es wird mit einer CCD-Kamera und mit zwei Lichtquellen gearbeitet. Ein Lichtstrahl wird reflektiert und ein Lichtstrahl wird durch das zu prüfende Objekt geleitet um Fehler zu erkennen.

Die WO 2010/052431 A1 zeigt eine Vorrichtung zur optischen Inspektion von Etiketten auf Paketen. Über ein Förderband werden Pakete an einer Kamera vorbei transportiert. Als Kamera wird eine Zeilenkamera verwendet. Um etwaige Fehler zu erkennen erfolgt eine Beleuchtung mit polarisiertem Licht, welches mittels Fresnel-Linsen geleitet wird.

Der vorliegenden Erfindung liegt die Aufgabe zugrunde, ein Verfahren und eine Vorrichtung bereitzustellen, welche eine schnelle und dabei präzise, und reproduzierbare Fehlererkennung von keramischen Körpern oder Geschirr ermöglicht. Insbesondere soll die Fehlererkennung kompakt aufgebaut und kostengünstig herstellbar sein.

Diese Aufgabe wird erfindungsgemäß durch ein Verfahren zur optischen Detektion von Fehlern in keramischen Artikeln, insbesondere keramischem Geschirr und/oder Porzellangeschirr, nach den Merkmalen des Anspruchs 1 gelöst.

Erfindungsgemäß wird ein Verfahren zur optischen Detektion von Fehlern in keramischen Artikeln, insbesondere keramischem Geschirr vorgeschlagen, umfassend die Bereitstellung einer Lichtquelle, einer Kamera, einer Fördereinheit zum Transport eines zu prüfenden keramischen Artikels, einer elektronischen Steuereinrichtung und einer Auswerteeinrichtung, wobei die Lichtquelle den zu prüfenden keramischen Artikel beleuchtet, und wobei die Kamera als eine Zeilenkamera ausgebildet ist und zur Detektion von Fehlern im keramischen Artikel bei einer Bildaufnahme eine Zeile des keramischen Artikels aufnimmt, und wobei der keramische Artikel auf einem Förderband derart transportiert wird, dass bei mehreren Bildaufnahmen die Kamera mehrere Zeilen des keramischen Artikels aufnimmt, und wobei die elektronische Steuereinrichtung die Kamera und/oder die Lichtquelle und/oder das Förderband steuert und wobei die Auswerteeinrichtung die aufgenommenen Bilder auswertet, insbesondere die mehreren aufgenommenen Zeilen der Zeilenkamera zu einem Bild zusammensetzt. Wesentlich dabei ist, dass der keramische Artikel telezentrisch beleuchtet und/oder telezentrisch detektiert wird, vorzugsweise dass die Lichtquelle telezentrisch auf dem keramischen Artikel abgebildet wird und/oder dass die Detektionsfläche der Kamera telezentrisch auf dem keramischen Artikel abgebildet wird.

Weiter wird die erfindungsgemäße Aufgabe durch eine Vorrichtung nach den Merkmalen des Anspruchs 12 gelöst.

Erfindungsgemäß wird eine Vorrichtung zur optischen Detektion von Fehlern in keramischen Artikeln, insbesondere keramischem Geschirr und/oder Porzellangeschirr vorgeschlagen, umfassend eine Lichtquelle, eine Kamera, eine Fördereinheit zum Transport eines zu prüfenden keramischen Artikels, eine elektronische Steuereinrichtung und eine Auswerteeinrichtung, wobei die Lichtquelle den keramischen Artikel beleuchtet, und wobei die Kamera als eine Zeilenkamera ausgebildet ist und zur Detektion von Fehlern im keramischen Artikel bei einer Bildaufnahme eine Zeile des keramischen Artikels aufnimmt, und wobei der keramische Artikel auf einem Förderband derart transportiert wird, dass bei mehreren Bildaufnahmen die Kamera mehrere Zeilen des keramischen Artikels aufnimmt, und wobei die elektronische Steuereinrichtung die Kamera und/oder die Lichtquelle und/oder das Förderband steuert, und wobei die Auswerteeinrichtung die aufgenommenen Bilder auswertet, insbesondere die mehreren aufgenommenen Zeilen der Zeilenkamera zu einem Bild zusammensetzt. Wesentlich dabei ist, dass für die telezentrische Beleuchtung ein beleuchtungsseitiges optisches Bauteil im Strahlengang der Lichtquelle angeordnet ist, und/oder dass für die telezentrische Detektion ein detektionsseitiges optisches Bauteil im Strahlengang der Kamera angeordnet ist, und/oder dass für die telezentrische Beleuchtung und telezentrische Detektion
- ein einziges optisches Bauteil im Strahlengang der Lichtquelle und/oder der Kamera angeordnet ist,
- oder zwei optische Bauteile angeordnet sind, ein beleuchtungsseitiges optisches Bauteil im Strahlengang der Lichtquelle und ein detektionsseitiges optisches Bauteil im Strahlengang der Kamera.

Vorzugsweise bedeutet hier telezentrisch, dass die Strahlen bei der Beleuchtung und/oder Detektion achsenparallel verlaufen. Der Vorteil einer telezentrischen Beleuchtung und/oder Detektion besteht darin, dass durch den gleichen Einfalls- und/oder Ausfallswinkel der Strahlen Fehler im keramischen Artikel an unterschiedlichen Stellen, beispielsweise an unterschiedlich geneigten Oberflächen, unter einem gleichen Winkel beleuchtet werden und von der Kamera unter gleichem Winkel aufgenommen werden. Daraus resultiert, dass von der Auswerteeinrichtung Fehler an verschiedenen Orten auf den keramischen Artikeln erkannt werden. Auch eine Zuordnung der Art des Fehlers ist dadurch einfacher möglich. Dadurch erkennt die Auswerteeinrichtung Fehler auch unter unterschiedlichen Neigungen oder Krümmungen des keramischen Artikels. Ein weiterer Vorteil einer telezentrischen Beleuchtung und/oder Detektion besteht darin, dass es keine perspektivische Verzerrung bei der Beleuchtung und der Detektion bei nicht flächigen keramischen Artikeln gibt.

Insbesondere bedeutet telezentrische Beleuchtung des keramischen Artikels, dass die Lichtquelle mittels eines telezentrischen Strahlengangs auf den keramischen Artikel abgebildet wird. Der keramische Artikel wird bei der telezentrischen Beleuchtung mit parallelen Strahlen beleuchtet, d.h. die Lichtstrahlen treffen im gleichen Einfallswinkel auf dem keramischen Artikel auf.

Insbesondere bedeutet telezentrische Detektion des keramischen Artikels, dass die Detektionsfläche der Kamera mittels eines telezentrischen Strahlengangs auf dem keramischen Artikel abgebildet wird, d.h. ein Teil des vom keramischen Artikel reflektierten Lichts über einen telezentrischen Strahlengang von der Kamera aufgenommen wird. Die Kamera nimmt den keramischen Artikel bei der telezentrischen Detektion unter parallelen Strahlen auf, d.h. die detektierten Lichtstrahlen strahlen im gleichen Ausfallswinkel von Oberflächenelementen gleicher Neigung deskeramischen Artikels ab.

Ein Vorteil der telezentrischen Beleuchtung und/oder der telezentrischen Detektion ist, dass bei stark glänzenden Oberflächen und/oder bei stark gekrümmten Oberflächen eine gute optische Fehlerdetektion möglich ist.

In der Praxis treten unterschiedliche Fehlerbilder bei keramischen Artikeln mit optisch unterschiedlichen Erscheinungsbildern zu Tage. Eine manuelle Auswertung der Fehler durch Personal ist dabei fehleranfällig und streut individuell. Auch kann vorkommen, dass Fehler anhand einer manuellen Sichtprüfung bei unterschiedlichen keramischen Artikeln, beispielsweise bei unterschiedlicher Form und Farbe oder bei unterschiedlichen Mustern, dabei nicht immer zuverlässig erkannt werden.

Die elektronische Steuereinrichtung und/oder Auswerteeinrichtung kann einen Computer oder ein Rechnersystem mit darauf installierter Software zur Bilderkennung bzw. Bildauswertung umfassen. Ferner kann die elektronische Steuereinrichtung und/oder Auswerteeinrichtung entsprechende Treiber zur Ansteuerung der Transporteinrichtung und/oder von Robotern für die Handhabung der zu prüfenden keramischen Artikel oder Geschirrteile aufweisen.

Es kann vorgesehen sein, dass die elektronische Steuereinrichtung und/oder Auswerteeinrichtung selbstlernend ausgebildet ist. Das heißt, dass beim Einrichten der Maschine Fehlerteile und Gutteile aufgenommen werden, und die elektronische Steuereinrichtung anhand der sich von den Gutteilen unterscheidenden Aufnahmen der Fehlerteile selbsttätig eine Schwelle zur Erkennung von Fehlern einstellt. Sofern im laufenden Betrieb bei einer Aufnahme diese Fehlerschwelle erreicht wird, erkennt die Steuereinrichtung ein Fehlerteil und zeigt dieses an. Das fehlerhafte Teil kann dann anschließend von der Transporteinrichtung zu einem bestimmten Ort transportiert werden, beispielsweise aus dem Produktstrom ausgeschleust werden.

Alternativ zu der Aufnahme von Bildern können der Steuereinrichtung und/oder Auswerteeinrichtung entsprechende Bilder von Fehlerteilen und Gutteilen als Dateien eingespielt werden. Anhand dieser Dateien kann die elektronische Steuereinrichtung und/oder Auswerteeinrichtung eine Fehlerschwelle bestimmen und abspeichern.

Vorzugsweise kann die elektronische Steuereinrichtung und/oder Auswerteeinrichtung unterschiedliche Fehlerschwellen festlegen oder umfassen, wobei für ein bestimmtes Fehlerbild eine bestimmte Fehlerschwelle vorgesehen ist. Um während des Betriebes eine Optimierung zu ermöglichen, kann vorgesehen sein, dass die elektronische Steuereinrichtung und/oder Auswerteeinrichtung die Fehlerschwelle verändert oder dass eine Bedienperson die Fehlerschwelle verändern kann. Dadurch kann die Rate von fälschlicherweise als fehlerhaft erkannter keramischer Artikel bzw. Geschirrteile reduziert werden.

Es ist vorzugsweise auch vorgesehen, dass die elektronische Steuereinrichtung und/oder Auswerteeinrichtung zum Erkennen mehrerer Qualitätsstufen ausgebildet sein kann. Beispielsweise kann die elektronische Steuereinrichtung mehrere Fehlerschwellen aufweisen, um die geprüften Teile in mehrere Qualitätsstufen, beispielsweise in drei oder vier oder fünf unterschiedliche Qualitätskategorien einzuteilen.

Insbesondere ermöglicht die elektronische Steuereinrichtung und/oder Auswerteeinrichtung durch die definierten Fehlerschwellen ein reproduzierbares Prüfresultat. Um eine Dokumentation des Prüfprozesses zu ermöglichen, kann die elektronische Steuereinrichtung einen Speicher aufweisen, in dem die zu einem fehlerhaften Teil gehörende Bildaufnahme gespeichert wird. Dadurch wird es ermöglicht den Prüfvorgang nachträglich auszuwerten. Durch nachträgliches Justieren der Fehlerschwelle kann die Qualität der Fehlererkennung weiter verbessert werden.

Es kann vorgesehen sein, dass die optische Fehlererkennung im laufenden Betrieb, das heißt während der laufenden Fertigung von keramischen Artikeln bzw. Geschirrteilen durchgeführt wird. Die zu prüfenden keramischen Artikel bzw. Geschirrteile können manuell oder automatisch, beispielsweise durch einen Roboterarm, der Fördereinheit bzw. dem Förderband zugestellt werden. Die Fördereinheit bzw. das Förderband transportiert die zu prüfenden keramischen Artikel bzw. Geschirrteile an der Zeilenkamera vorbei, wobei diese, durch die Steuereinrichtung gesteuert, eine oder mehrere Bildaufnahmen eines zu prüfenden Teiles macht. Über die Auswerteeinrichtung werden die Bildaufnahmen ausgewertet und auf das Vorhandensein von Fehlern geprüft. Im Falle eines Fehlers steuert die Steuereinrichtung und/oder Auswerteeinrichtung beispielsweise eine visuelle Anzeige an, um den Fehler anzuzeigen. Es kann auch vorgesehen sein, dass die Steuereinrichtung und/oder Auswerteeinrichtung die Fördereinheit ansteuert, um das fehlerhafte Teil aus dem Produktstrom auszuschleusen. Vorzugsweise kann die Steuereinrichtung und/oder Auswerteeinrichtung einen nach (stromab) der Kamera angeordneten Roboterarm ansteuern, um ein fehlerhaftes Teil von der Fördereinheit zu entnehmen.

Bei der Qualität der optischen Fehlererkennung hat sich gezeigt, dass der Art der Beleuchtung eine tragende Rolle zukommt. Eine Verwendung einer telezentrischen Beleuchtung und/oder telezentrischen Detektion hat bei den zu prüfenden keramischen Artikeln bzw. Geschirrteilen mit ihren gekrümmten und teils stark glänzenden Oberflächen zu guten Ergebnissen geführt. Es kann vorgesehen sein, dass die Beleuchtung und/oder Detektion objektseitig telezentrisch oder objektseitig und bildseitig telezentrisch erfolgt, wobei der keramische Artikel objektseitig angeordnet ist. Ein objektseitig telezentrischer Strahlengang wird verwendet, um Objekte ohne perspektivische Verzerrung zu erfassen oder zu beleuchten. Die Strahlen der Beleuchtung oder Detektion treffen bei einem objektseitigen telezentrischen Strahlengang parallel auf dem keramischen Körper auf. Dadurch ändert sich der Abbildungsmaßstab bei axialer Objektverschiebung nicht. Der keramische Körper erscheint also unabhängig vom Objektabstand immer gleich groß. Ein bildseitiger telezentrischer Strahlengang dient vor allem der Parallelisierung des Strahlenganges in der Optik der Kamera oder der Beleuchtung. Der Vorteil besteht darin, dass man die Bildebene ohne Veränderung des Abbildungsmaßstabs nachfokussieren kann.

In einer Ausgestaltung kann vorgesehen sein, dass die Lichtquelle und die Kamera als separate Baueinheiten ausgebildet sind oder räumlich getrennt voneinander angeordnet sind. Vorzugsweise kann die Lichtquelle als eine Punktquelle oder eine Linien-Lichtquelle ausgebildet sein. Insbesondere kann die Lichtquelle eine Mehrzahl von LEDs (Leuchtdioden) aufweisen, die in einer Linie nebeneinander angeordnet sind.

Vorzugsweise kann die Kamera als CCD-Kamera mit zweidimensionalem Sensor ausgebildet sein.

In einer vorteilhaften Ausgestaltung kann die Kamera als Zeilenkamera mit einem Zeilensensor ausgebildet sein. Ein Vorteil einer Zeilenkamera ist die schnelle Auslesezeit und die höhere Pixelzahl der Zeile, verglichen mit Kameras mit zweidimensionalen Sensoren.

Es sind unterschiedliche Ausgestaltungen bzw. Konstellationen oder Anordnungen von Lichtquelle und Kamera zur optischen Detektion von Fehlern möglich, ohne den Rahmen der Erfindung zu verlassen.

In einer Ausgestaltung kann vorgesehen sein, dass der keramische Artikel telezentrisch beleuchtet wird und nicht telezentrisch detektiert wird, oder dass der keramische Artikel nicht telezentrisch beleuchtet wird und telezentrisch detektiert wird, oder dass der keramische Artikel telezentrisch beleuchtet wird und telezentrisch detektiert wird.

Vorzugsweise kann vorgesehen sein, dass für die telezentrische Beleuchtung und/oder Detektion ein optisches Bauteil im Strahlengang angeordnet ist. Es kann vorgesehen sein, dass die telezentrische Beleuchtung und Detektion durch ein optisches Bauteil oder zwei optische Bauteile, ein beleuchtungsseitiges optisches Bauteil und ein detektionsseitiges optische Bauteil, erfolgt. Die telezentrische Beleuchtung und/oder Detektion kann durch das optische Bauteil erzeugt werden, und muss nicht direkt durch die Lichtquelle oder durch die Kamera erzeugt werden. Durch das optische Bauteil kann unabhängig von der Lichtquelle und/oder der Kamera eine telezentrische Beleuchtung und/oder Detektion sichergestellt werden.

Es kann vorgesehen sein, dass das optische Bauteil, vorzugsweise das beleuchtungsseitige und/oder das detektionsseitige optische Bauteil als eine Linse, oder ein Linsensystem, oder eine Stablinse, oder Spiegelsystem, oder als eine asphärische Linse, oder eine Fresnellinse ausgebildet ist.

In einer Ausgestaltung kann vorgesehen sein, dass ein teildurchlässiger Spiegel über dem keramischen Körper angeordnet ist, vorzugsweise, dass der teildurchlässige Spiegel den Strahlengang der Lichtquelle und den Strahlengang der Kamera überlappt, um den keramischen Körper telezentrisch zu beleuchten und telezentrisch zu detektieren. Dadurch kann eine telezentrische Beleuchtung und Detektion unter den gleichen Einfallswinkeln erreicht werden. Damit wird sichergestellt, dass die Bereiche, die durch die Kamera detektiert werden, auch durch die Lichtquelle beleuchtet werden.

Es kann vorgesehen sein, dass der teildurchlässige Spiegel den Strahlengang der Lichtquelle von der Lichtquelle zum keramischen Körper derart ablenkt, dass der Strahlengang im Bereich vom keramischen Körper bis zum teildurchlässigen Spiegel parallel zu dem Strahlengang der Kamera verläuft und in dem Bereich zwischen dem teildurchlässigen Spiegel und der Lichtquelle von dem Strahlengang der Kamera abzweigt. Dadurch kann eine räumliche Trennung von Lichtquelle und Kamera erfolgen.

Es kann vorgesehen sein, dass die Lichtquelle zur telezentrischen Beleuchtung mehrere Strahlungsquellen aufweist. Vorzugsweise sind die mehreren Strahlungsquellen der telezentrischen Beleuchtung in zwei Reihen nebeneinander angeordnet, vorzugsweise entsprechend der linearen Detektion der Kamera. Es kann vorgesehen sein, dass die mehreren Strahlungsquellen der ersten Reihe räumlich versetzt nebeneinander zu den mehreren Strahlungsquellen der zweiten Reihe ausgebildet sind. Es kann vorgesehen sein, dass die erste Reihe und die zweite Reihe in einem Winkel zueinander angeordnet sind, um trotz des räumlichen Versatzes nebeneinander den keramischen Artikel auf einer Linie zu beleuchten.

Vorzugsweise kann vorgesehen sein, dass der keramische Artikel zusätzlich zur telezentrischen Beleuchtung durch eine diffuse Lichtquelle beleuchtet wird. Dadurch kann bspw. je nach Reflexionsverhalten des zu prüfenden Körpers der Kontrast des aufgenommenen Bildes verbessert werden.

Es kann vorgesehen sein, dass die telezentrische Lichtquelle und/oder dass die diffuse Beleuchtung schaltbar ist bzw. sind.

Insbesondere ist vorgesehen, dass die Lichtquelle oder die mehreren Strahlungsquellen LEDs (Leuchtdioden) aufweist. Die LEDs können hinsichtlich ihrer Intensität und/oder Leuchtdauer und/oder Lichttemperatur bzw. Lichtfarbe schaltbar sein.

Es kann vorzugsweise auch vorgesehen sein, dass die Lichtquelle mehrere in Reihen oder Zeilen angeordnete Zeilenmodule umfasst. Jedes der Zeilenmodule kann dabei eine Vielzahl nebeneinander angeordneter LEDs aufweisen. Insbesondere beleuchtet ein solches Zeilenmodul den zu prüfenden Körper in einem vorbestimmten Winkel, der sich von dem Beleuchtungswinkel eines benachbarten Zeilenmoduls unterscheidet.

Vorzugsweise kann die Lichtquelle eine Linienlichtquelle umfassen, die mit ihrer Längserstreckung quer, also rechtwinklig, zu der Förderrichtung der Fördereinheit angeordnet ist. Es ist auch denkbar, dass mehrere Linienlichtquellen vorgesehen sind, die in unterschiedlichen Winkeln relativ zu der Förderrichtung der Fördereinheit angeordnet sind.

Insbesondere kann die Steuerungseinrichtung mit der Lichtquelle, oder mit den mehreren Zeilenmodulen der Lichtquelle und/oder mit der Vielzahl von LEDs der Lichtquelle verbunden sein um diese zu steuern oder zu schalten. Die Steuerungseinrichtung kann die LEDs einzeln oder in Gruppen schalten und/oder die Zeilenmodule einzeln und/oder in Gruppen schalten, oder deren Lichtintensität steuern. Insbesondere ist die Steuerungseinrichtung zudem mit der Fördereinheit verbunden, um den zu prüfenden Körper synchron zu der Aufnahme zu transportieren.

In einer Ausgestaltung kann vorgesehen sein, dass durch die telezentrische Detektion bei der Bildaufnahme die gesamte Breite einer Zeile des keramischen Artikels von der Kamera detektiert wird, und/oder dass durch die telezentrische Beleuchtung bei der Beleuchtung die gesamte Breite einer Zeile des keramischen Artikels von der Kamera beleuchtet wird. Der Vorteil besteht darin, dass die Belichtung und/oder Detektion und die Optik nicht für die gesamte 2-dimensionale Größe des keramischen Körpers ausgebildet sein muss, die Beleuchtung und Aufnahme einer Zeile über die gesamte Breite des keramischen Artikels genügt.

Es kann vorgesehen sein, dass die Fördereinheit als ein Förderband oder ein Verfahrtisch oder ein Riemenband, oder Transportarm, oder Transporteinrichtung ausgebildet ist.

Es kann vorgesehen sein, dass die Fördereinheit den keramischen Artikel kontinuierlich oder schrittweise entlang einer Förderrichtung transportiert, insbesondere quer zu dem Strahlengang der Kamera transportiert. Insbesondere ist vorgesehen, dass die Fördereinheit den zu prüfenden keramischen Artikel ohne Zwischenstopp und ohne die vorgegebene Transportgeschwindigkeit zu verlangsamen transportiert, so dass die Taktrate einer Fertigung von keramischen Artikeln durch das erfindungsgemäße Verfahren oder Vorrichtung nicht verlangsamt wird.

Beim Verfahren und der Vorrichtung kann vorgesehen sein, dass das optische Bauteil, vorzugsweise das beleuchtungsseitige und/oder das detektionsseitige optische Bauteil, als eine Linse, oder ein Linsensystem, oder eine Stablinse, oder Spiegelsystem oder eine asphärische Linse, oder eine Fresnellinse ausgebildet ist.

Beim Verfahren und der Vorrichtung kann vorgesehen sein, dass ein teildurchlässiger Spiegel über dem keramischen Körper angeordnet ist, vorzugsweise, dass der teildurchlässige Spiegel den Strahlengang der Lichtquelle und den Strahlengang der Kamera überlappt, um den keramischen Körper telezentrisch zu beleuchten und zu detektieren.

Beim Verfahren und der Vorrichtung kann vorgesehen sein, dass der keramische Artikel zusätzlich zur telezentrischen Beleuchtung durch eine diffuse Lichtquelle beleuchtet wird.

Eine Anwendung des erfindungsgemäßen Verfahrens und der erfindungsgemäßen Vorrichtung kann in der Herstellung von Geschirr oder Porzellan oder Sanitärkeramik erfolgen, um die hergestellten Teile automatisch auf Fehler zu prüfen.

Weitere Ausführungen der Erfindung sind in den Figuren dargestellt und nachfolgend beschrieben. Dabei zeigen:
- Fig. 1:: Eine schematische Darstellung der Vorrichtung zur optischen Detektion von Fehlern in keramischen Artikeln;
- Fig. 2:: Eine schematische Darstellung der telezentrischen Beleuchtung und telezentrischen Detektion mit zwei optischen Bauteilen;
- Fig. 3:: Eine schematische Darstellung der telezentrischen Beleuchtung und telezentrischen Detektion mit einem optischen Bauteil;
- Fig. 4:: Eine schematische Darstellung einer Draufsicht einer Lichtquelle mit mehreren Strahlungsquellen räumlich versetzt zueinander;
- Fig. 5:: Eine schematische Darstellung einer Seitenansicht einer Lichtquelle mit mehreren Strahlungsquellen winklig zueinander angeordnet.

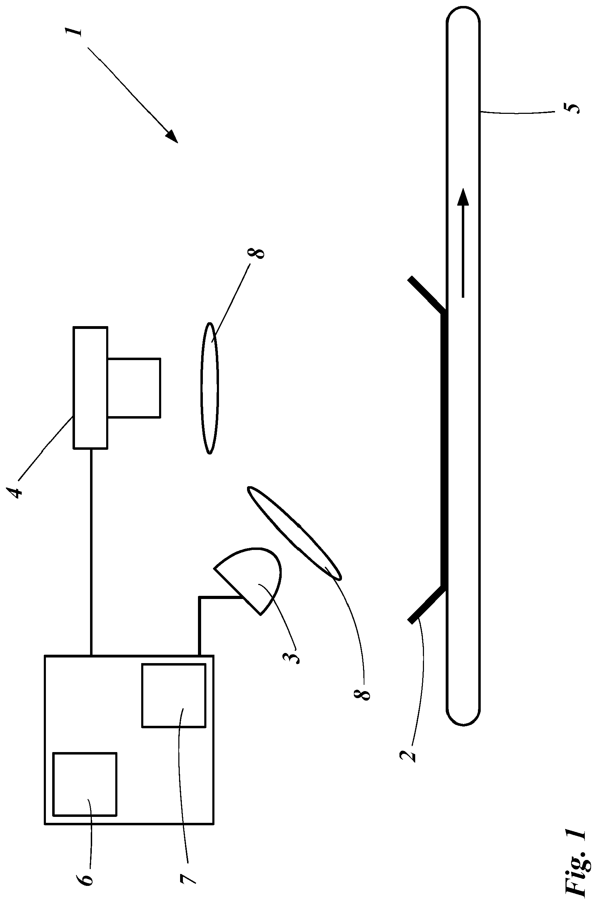

Fig. 1 zeigt eine schematische Darstellung einer erfindungsgemäßen Vorrichtung 1 zur optischen Detektion von Fehlern in keramischen Artikeln 2, umfassend eine Lichtquelle 3, eine Kamera 4, einen zu prüfenden keramischen Artikel 2, eine Fördereinheit 5, eine elektronische Steuereinrichtung 6 und eine Auswerteeinrichtung 7. Der keramische Artikel 2, in dem dargestellten Beispiel ein Teller, wird auf der Fördereinheit 5 in Förderrichtung (Pfeil in Fig. 1) unter der Lichtquelle 3 und der Kamera 4 hindurchgeführt. Im Ausführungsbeispiel der Fig. 1 ist die Fördereinheit 5 als ein Förderband 5 ausgebildet. Das Förderband 5 kann ein geschlossenes umlaufendes Transportband, oder mehrere parallel zueinander umlaufend angeordnete Transportriemen aufweisen.

Die Lichtquelle 3 weist mehrere in einer Reihe nebeneinander angeordneter LEDs auf. Die LEDs werden von der elektronischen Steuereinrichtung 6 geschaltet. Die Lichtquelle 3 beleuchtet den keramischen Artikel 2, wobei zwischen der Lichtquelle 3 und dem keramischen Artikel 2 ein optisches Bauteil 8, beispielsweise eine Linse, angeordnet ist, um den keramischen Artikel 2 telezentrisch zu beleuchten. Das optische Bauteil 8 kann als eine Stablinse ausgebildet sein. Alternativ kann auch pro LED eine optische Linse vorgesehen sein, um den zu prüfenden keramischen Artikel 2 telezentrisch zu beleuchten.

Die Kamera 4 nimmt Bilder des beleuchteten keramischen Artikels 2 auf. Zwischen der Kamera 4 und dem keramischen Artikel 2 ist ein weiteres optisches Bauteil 8 ausgebildet, beispielsweise ein Objektiv oder eine Linse, um den keramischen Artikel 2 telemetrisch zu detektieren.

Die elektronische Steuereinrichtung 6 und die Auswerteeinrichtung 7 sind im Ausführungsbeispiel der Fig. 1 in einer gemeinsamen Anlage ausgebildet und sind sowohl mit der Lichtquelle 3 als auch der Kamera 4 verbunden, um beides zu steuern und um Bilder und Informationen aus der Kamera 4 auszulesen. Es kann auch vorgesehen sein, dass mehrere Anlagen vorgesehen sind, umfassend jeweils eine Kamera 4, eine Lichtquelle 3, sowie ein Förderband 5, die von einer gemeinsamen elektronischen Steuereinrichtung 6 gesteuert werden und eine zentrale Auswerteeinrichtung 7 aufweisen.

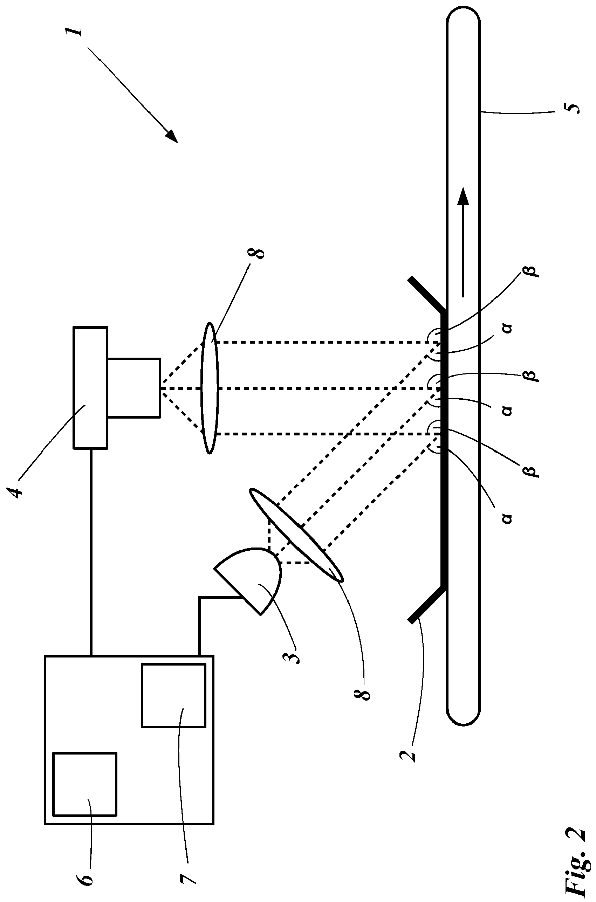

Fig. 2 zeigt die erfindungsgemäße Vorrichtung aus Fig. 1 mit der Strahlführung einer telezentrischen Beleuchtung und Detektion. Wie in Fig. 2 dargestellt, treffen die Strahlen der Beleuchtung achsenparallel auf dem keramischen Artikel 2 unter einem Winkel α auf. Das optische Bauteil 8 zwischen der Lichtquelle 3 und dem keramischen Artikel 2 richtet die Strahlen der punktförmigen oder linienförmigen Lichtquelle 2 achsenparallel aus.

Wie in Fig. 2 weiter dargestellt, detektiert die Kamera 4 ausgehend vom keramischen Körper die achsenparallelen Lichtstrahlen unter einem gemeinsamen zweiten Winkel β. Durch das optische Bauteil 8 zwischen keramischem Körper 2 und der Kamera 4 werden die achsenparallelen Strahlen auf die Detektionsfläche der Kamera 4 fokussiert.

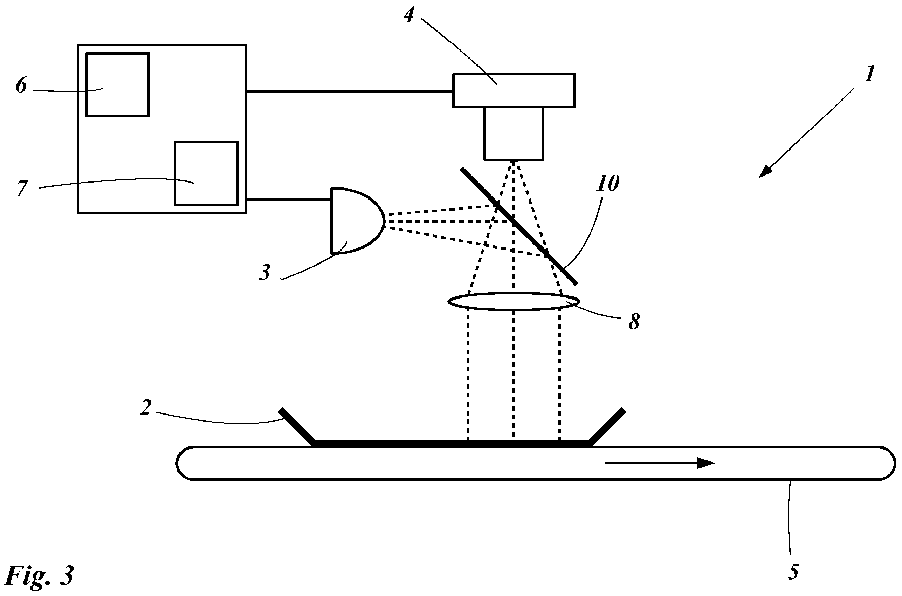

Fig. 3 zeigt ein zweites Ausführungsbeispiel der erfindungsgemäßen Vorrichtung mit nur einem optischen Bauteil 8 und einer sowohl telezentrischen Beleuchtung als auch einer telezentrischen Detektion des keramischen Artikels 2. Dazu ist zwischen der Kamera 4 und dem optischen Bauteil 8 zur achsenparallelen Ausrichtung der Strahlen ein teildurchlässiger Spiegel 10 angeordnet, wodurch ein Teil der Strahlen vom keramischen Körper 2 zur Kamera 4 transmittieren und die Kamera den keramischen Artikel 2 unter telezentrisch auftreffenden Strahlen am keramischen Artikel detektiert. Die telezentrische Beleuchtung erfolgt in diesem Ausführungsbeispiel durch die Lichtquelle 3 mit nicht achsenparallelen Strahlen über den teildurchlässigen Spiegel 10.

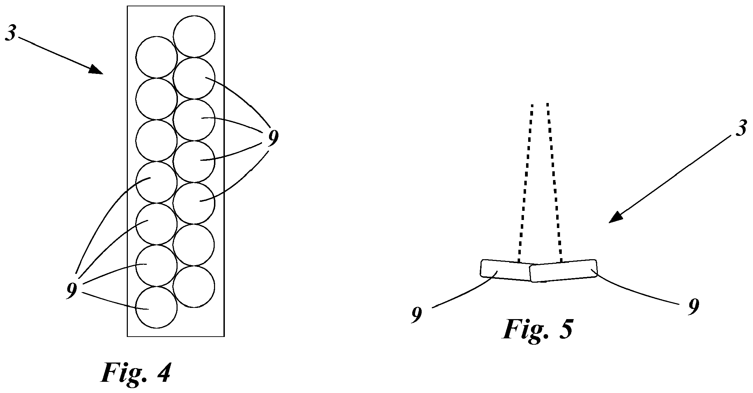

Fig. 4 und 5 zeigen ein Ausführungsbeispiel der Lichtquelle 3 als ein Zeilenmodul mit mehreren Strahlungsquellen 9, beispielsweise mehrere Licht-emittierende-Halbleiterdioden (LED). Ein derartiges Ausführungsbeispiel der Lichtquelle 3 kann in Verbindung mit einer Linienkamera genutzt werden, um den Aufnahmebereich der Linienkamera homogen zu beleuchten.

Es kann vorgesehen sein, dass eine Anlage eine Lichtquelle 3 mit mehreren Zeilenmodulen aufweist, die jeweils versetzt zueinander angeordnet sind, um einen zu prüfenden Körper aus verschiedenen Winkeln zu beleuchten. Um eine einfache Reparatur zu ermöglichen können die Zeilenmodule an der Anlage, beispielsweise an einem tragenden Rahmen, auswechselbar bzw. abnehmbar gehaltert sein.

Die mehreren Strahlungsquellen 9 sind, wie in Fig. 4 in einer Draufsicht gezeigt, in zwei Linien oder Reihen nebeneinander angeordnet, wobei die zwei Linien oder Reihen zueinander jeweils um den halben Durchmesser einer Strahlungsquelle 9 versetzt sind. In jeder der Linien oder Reihen sind eine Vielzahl von LEDs nebeneinander angeordnet. Die LEDs sind derart versetzt zueinander angeordnet, dass sich deren Strahlungsbild partiell derart überlappt, dass sich Bereiche unterschiedlicher Strahlungsintensität ausgleichen. Durch diese Anordnung wird eine Bestrahlung einer Linie des keramischen Körpers 2 mit gleichbleibender Intensität ermöglicht. Durch die Beleuchtung jeder Strahlungsquelle 9 aus der zweiten Reihe wird das jeweilige Beleuchtungsintensitätsminimum zwischen der Beleuchtung jeder Strahlungsquelle 9 der ersten Reihe ausgefüllt. Es kann vorgesehen sein, dass die Linien oder Reihen in einer Ebene angeordnet sind, oder wie in Fig. 5 gezeigt einen Winkel zueinander aufweisen.

Fig. 5 zeigt die Seitenansicht der Lichtquelle 3 aus Fig. 4. Die Strahlungsquellen 9 einer Linie sind dabei in einem kleinen Winkel zueinander angeordnet. Der Winkel ist so bemessen, dass die Strahlen in einer Linie nebeneinander auf dem keramischen Körper 2 auftreffen.

### Bezugszeichenliste

- 1: Vorrichtung zur optischen Detektion von Fehlern in keramischen Artikeln
- 2: keramischer Artikel
- 3: Lichtquelle
- 4: Kamera
- 5: Fördereinheit
- 6: Steuereinrichtung
- 7: Auswerteeinrichtung
- 8: optisches Bauteil
- 9: Strahlungsquelle
- 10: teildurchlässiger Spiegel

## Patentansprüche

1. Verfahren zur optischen Detektion von Fehlern in keramischen Artikeln (2), insbesondere keramischem Geschirr und/oder Porzellangeschirr, umfassend die Bereitstellung einer Lichtquelle (3), einer Kamera (4), einer Fördereinheit (5) zum Transport eines zu prüfenden keramischen Artikels (2), sowie einer elektronischen Steuereinrichtung (6) und einer Auswerteeinrichtung (7),
wobei die Lichtquelle (3) den zu prüfenden keramischen Artikel (2) beleuchtet, und
wobei die Kamera (4) als eine Zeilenkamera ausgebildet ist und zur Detektion von Fehlern im keramischen Artikel (2) bei einer Bildaufnahme mehrmals hintereinander eine Zeile des keramischen Artikels (2) aufnimmt, und wobei der keramische Artikel (2) auf einer Fördereinheit (5) derart transportiert wird, dass bei mehreren Bildaufnahmen die Kamera (4) mehrere Zeilen des keramischen Artikels (2) aufnimmt, und
wobei die elektronische Steuereinrichtung (6) die Kamera (4) und/oder die Lichtquelle (3) und/oder die Fördereinheit (5) steuert und
wobei die Auswerteeinrichtung (7) die aufgenommenen Bilder auswertet, insbesondere die mehreren aufgenommenen Zeilen der Zeilenkamera zu einem Bild zusammensetzt,
**dadurch gekennzeichnet,**
**dass** der keramische Artikel (2) durch die Lichtquelle (3) telezentrisch beleuchtet und/oder durch die Kamera (4) telezentrisch detektiert wird, vorzugsweise dass die Lichtquelle (3) telezentrisch auf dem keramischen Artikel (2) abgebildet wird und/oder dass die Detektionsfläche der Kamera (4) telezentrisch auf dem keramischen Artikel (2) abgebildet wird.

2. Verfahren zur optischen Detektion von Fehlern in keramischen Artikeln (2) nach Anspruch 1,
**dadurch gekennzeichnet,**
**dass** die Beleuchtung und/oder Detektion objektseitig telezentrisch erfolgt, oder objektseitig und bildseitig telezentrisch erfolgt, wobei der zu prüfende keramische Artikel (2) objektseitig angeordnet ist.

3. Verfahren zur optischen Detektion von Fehlern in keramischen Artikeln (2) nach Anspruch 1 oder 2,
**dadurch gekennzeichnet,**
**dass** die Lichtquelle (3) und die Kamera (4) als separate Baueinheiten ausgebildet sind und/oder räumlich getrennt voneinander angeordnet sind.

4. Verfahren zur optischen Detektion von Fehlern in keramischen Artikeln (2) nach einem der vorangehenden Ansprüche,
**dadurch gekennzeichnet,**
**dass** der keramische Artikel (2) durch die Lichtquelle (3) telezentrisch beleuchtet wird und durch die Kamera (4) nicht telezentrisch detektiert wird, oder dass der keramische Artikel (2) durch die Lichtquelle (3) nicht telezentrisch beleuchtet wird und durch die Kamera (4) telezentrisch detektiert wird, oder dass der keramische Artikel (2) durch die Lichtquelle (3) telezentrisch beleuchtet wird und durch die Kamera (4) telezentrisch detektiert wird.

5. Verfahren zur optischen Detektion von Fehlern in keramischen Artikeln (2) nach einem der vorangehenden Ansprüche,
**dadurch gekennzeichnet,**
**dass** für die telezentrischen Beleuchtung und/oder Detektion ein optisches Bauteil (8) im Strahlengang zwischen der Lichtquelle und dem zu prüfenden keramischen Artikel (2) angeordnet ist, und/oder im Strahlengang zwischen dem zu prüfenden keramischen Artikel (2) und der Kamera (4) angeordnet ist, wobei vorzugsweise vorgesehen ist,
**dass** die telezentrische Beleuchtung und Detektion durch ein optisches Bauteil (8) oder zwei optische Bauteile (8), ein beleuchtungsseitiges optisches Bauteil (8) und ein detektionsseitiges optische Bauteil (8), erfolgt.

6. Verfahren zur optischen Detektion von Fehlern in keramischen Artikeln (2) nach Anspruch 5,
**dadurch gekennzeichnet,**
**dass** das optische Bauteil (8), vorzugsweise das beleuchtungsseitige und/oder das detektionsseitige optische Bauteil (8) als eine Linse, oder ein Linsensystem, oder eine Stablinse, oder Spiegelsystem oder eine asphärische Linse, oder eine Fresnellinse ausgebildet ist.

7. Verfahren zur optischen Detektion von Fehlern in keramischen Artikeln (2) nach einem der Ansprüche 5 oder 6,
**dadurch gekennzeichnet,**
**dass** ein teildurchlässiger Spiegel über dem keramischen Körper angeordnet ist, vorzugsweise, dass der teildurchlässige Spiegel (10) den Strahlengang der Lichtquelle (3) und den Strahlengang der Kamera (4) überlappt, um den keramischen Körper zu beleuchten und telezentrisch zu detektieren.

8. Verfahren zur optischen Detektion von Fehlern in keramischen Artikeln (2) nach Anspruch 7,
**dadurch gekennzeichnet,**
**dass** der teildurchlässige Spiegel (10) den Strahlengang der Lichtquelle (3) von der Lichtquelle (3) zum keramischen Körper derart ablenkt, dass der Strahlengang im Bereich vom keramischen Körper bis zum teildurchlässigen Spiegel (10) parallel zu dem Strahlengang der Kamera (4) verläuft und in dem Bereich zwischen dem teildurchlässigen Spiegel (10) und der Lichtquelle (3) von dem Strahlengang der Kamera (4) abzweigt.

9. Verfahren zur optischen Detektion von Fehlern in keramischen Artikeln (2) nach einem der vorangehenden Ansprüche,
**dadurch gekennzeichnet,**
**dass** der keramische Artikel (2) zusätzlich zu der telezentrischen Beleuchtung durch eine diffuse Lichtquelle (3) beleuchtet wird, wobei vorzugsweise vorgesehen ist, dass die telezentrische Lichtquelle (3) und/oder dass die diffuse Beleuchtung durch die elektronische Steuereinrichtung (6) schaltbar ist bzw. sind.

10. Verfahren zur optischen Detektion von Fehlern in keramischen Artikeln (2) nach einem der vorangehenden Ansprüche,
**dadurch gekennzeichnet,**
**dass** durch die telezentrische Detektion bei der Bildaufnahme die gesamte Breite einer Zeile des keramischen Artikels (2) von der Kamera (4) detektiert wird, und/oder
**dass** durch die telezentrische Beleuchtung bei der Beleuchtung zumindest die gesamte Breite einer Zeile des keramischen Artikels (2) beleuchtet wird, die von der Kamera (4) erfasst wird.

11. Verfahren zur optischen Detektion von Fehlern in keramischen Artikeln (2) nach einem der vorangehenden Ansprüche,
**dadurch gekennzeichnet,**
**dass** das Förderband den keramischen Artikel (2) kontinuierlich oder schrittweise entlang einer Förderrichtung transportiert, insbesondere quer zu einer Orientierung der Zeilenbreite der Kamera (4) transportiert.

12. Vorrichtung (1) zur optischen Detektion von Fehlern in keramischen Artikeln (2), insbesondere keramischem Geschirr und/oder Porzellangeschirr, umfassend eine Lichtquelle (3), eine Kamera (4), ein Förderband zum Transport eines zu prüfenden keramischen Artikels (2), eine elektronische Steuereinrichtung (6) und eine Auswerteeinrichtung (7),
wobei die Lichtquelle (3) einen zu prüfenden keramischen Artikel (2) beleuchtet, und
wobei die Kamera (4) als eine Zeilenkamera ausgebildet ist und zur Detektion von Fehlern im keramischen Artikel (2) bei einer Bildaufnahme eine Zeile des keramischen Artikels (2) aufnimmt, und
wobei der keramische Artikel (2) auf einem Förderband derart transportiert wird, dass bei mehreren Bildaufnahmen die Kamera (4) mehrere Zeilen des keramischen Artikels (2) aufnimmt, und
wobei die elektronische Steuereinrichtung (6) die Kamera (4) und/oder die Lichtquelle (3) und/oder das Förderband steuert, und
wobei die Auswerteeinrichtung (7) die aufgenommenen Bilder auswertet, insbesondere die mehreren aufgenommenen Zeilen der Zeilenkamera zu einem Bild zusammensetzt,
**dadurch gekennzeichnet,**
**dass** für die telezentrische Beleuchtung ein beleuchtungsseitiges optisches Bauteil (8) im Strahlengang der Lichtquelle (3) angeordnet ist, und/oder dass für die telezentrische Detektion ein detektionsseitiges optisches Bauteil (8) im Strahlengang der Kamera (4) angeordnet ist, und/oder dass für die telezentrische Beleuchtung und telezentrische Detektion
- ein einziges optisches Bauteil (8) im Strahlengang der Lichtquelle (3) und der Kamera (4) angeordnet ist,
- oder zwei optische Bauteile (8), ein beleuchtungsseitiges optisches Bauteil (8) im Strahlengang der Lichtquelle (3) und ein detektionsseitiges optisches Bauteil (8) im Strahlengang der Kamera (4) angeordnet sind.

13. Vorrichtung (1) zur optischen Detektion von Fehlern in keramischen Artikeln (2) nach Anspruch 12,
**dadurch gekennzeichnet,**
**dass** das optische Bauteil (8), vorzugsweise das beleuchtungsseitige und/oder das detektionsseitige optische Bauteil (8), als eine Linse, oder ein Linsensystem, oder eine Stablinse, oder Spiegelsystem oder eine asphärische Linse, oder eine Fresnellinse ausgebildet ist.

14. Vorrichtung (1) zur optischen Detektion von Fehlern in keramischen Artikeln (2) nach einem der Ansprüche 12 oder 13,
**dadurch gekennzeichnet,**
**dass** ein teildurchlässiger Spiegel (10) über dem keramischen Körper angeordnet ist, vorzugsweise, dass der teildurchlässige Spiegel (10) den Strahlengang der Lichtquelle (3) und den Strahlengang der Kamera (4) überlappt um den keramischen Körper telezentrisch zu beleuchten und zu detektieren.

15. Verfahren zur optischen Detektion von Fehlern in keramischen Artikeln (2) nach einem der Ansprüche 12 bis 14,
**dadurch gekennzeichnet,**
**dass** der keramische Artikel zusätzlich zur telezentrischen Beleuchtung durch eine diffuse Lichtquelle (3) beleuchtet wird.
